# EUROPÄISCHE PATENTSCHRIFT

(11) **EP 1 902 517 B1**
(45) Veröffentlichungstag und Bekanntmachung des Hinweises auf die Patenterteilung: **19.10.2011**
(21) Anmeldenummer: 06762459.3
(22) Anmeldetag: 06.07.2006
(51) Int. Cl.: H02P 7/00

(54) **SCHALTUNGSANORDNUNG ZUR ANSTEUERUNG EINES ELEKTROMOTORS IN EINEM KRAFTFAHRZEUG**
CIRCUIT ARRANGEMENT FOR ACTUATING AN ELECTRIC MOTOR IN A MOTOR VEHICLE
ENSEMBLE CIRCUIT POUR COMMANDER UN MOTEUR ELECTRIQUE DANS UN VEHICULE

(30) Priorität: 08.07.2005 DE 102005031943
(43) Veröffentlichungstag der Anmeldung: 26.03.2008
(73) Patentinhaber: Leopold Kostal GmbH & Co. KG, 58507 Lüdenscheid (DE)
(72) Erfinder: FORCK, Andreas, 45739 Oer-Erkenschwick (DE)
(74) Vertreter: Kerkmann, Detlef
(86) Internationale Anmeldenummer: PCT/EP2006/006606
(87) Internationale Veröffentlichungsnummer: WO 2007/006482

(56) Entgegenhaltungen:
- EP-A- 1 012 958
- DE-A1- 3 811 799
- US-A1- 2002 118 497

## Beschreibung

Die vorliegende Erfindung betrifft eine Schaltungsanordnung zur Ansteuerung eines Elektromotors gemäß des Oberbegriffs des Anspruchs 1.

Eine Schaltungsanordnung zur Ansteuerung eines Elektromotors ist aus der DE 698 19 180 T2 bekannt und dazu vorgesehen, einen Elektromotor wahlweise in eine der beiden Drehrichtungen zu steuern. Ist keines der Relais angesteuert, so sind die Motoranschlüsse über die Ruhekontakte der Relais miteinander verbunden. Dadurch wird erreicht, daß ein sich drehender Motor durch seinen kurzgeschlossenen Selbstinduktionsstrom schnell abgebremst wird und daß ein stehender Motor aufgrund des an beiden Motoranschlüssen anliegenden gleichen Potentials nicht anlaufen kann. Des weiteren offenbart dieses Dokument ein weiteres Relais, welches das Betriebspotential von den Arbeitskontakten der Motorbrückenrelais trennen kann, um bei letzteren eine Lichtbogenbildung beim Öffnen der Arbeitskontakte zu vermeiden.

Da die Ruhekontakte der Relais die Motoranschlüsse mit dem Massepotential verbinden, liegt im Ruhezustand der Relais an den Motoranschlüssen das gleiche Potential wie am Motorgehäuse. Dies verhindert insbesondere einen hohen Stromfluß bei einem motorinternen Schluß.

Kritisch ist es, wenn durch unzureichende Sicherungsmaßnahmen Personenschäden entstehen können. So gibt es in Kraftfahrzeugen motorbetätigte Einrichtungen, wie beispielsweise elektrisch verstellbare Sitze oder Fensterhebersteuerungen, bei denen Fehlfunktionen unmittelbar Verletzungen bei Fahrzeuginsassen bewirken können.

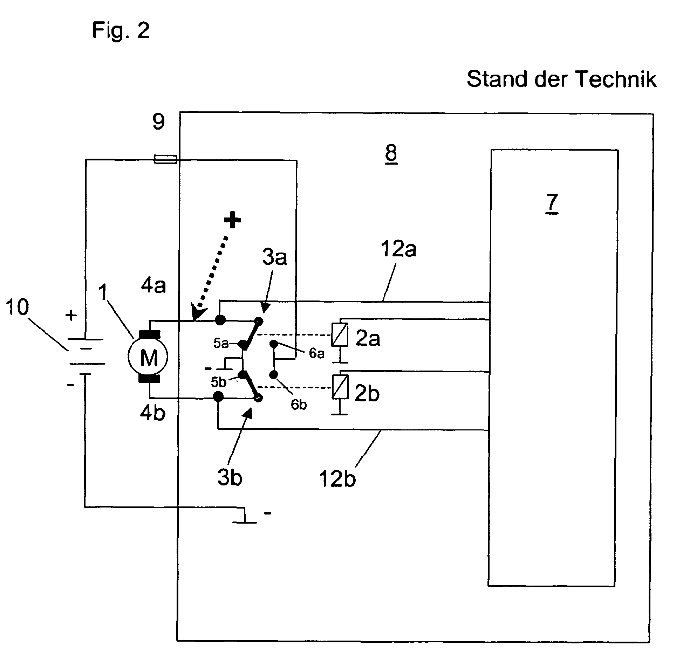

Wie noch näher ausgeführt wird, kann es bei einer Schaltung nach diesem Stand der Technik bei einem Kurzschluß zwischen einem der Motoranschlüsse und dem Betriebspotential des Fahrzeugs zu Fehlerzuständen kommen, die unter ungünstigen Umständen zu einem ungewollten Anlaufen des Elektromotors führen, wodurch Fahrzeuginsassen unmittelbar gefährdet sind. Dieses Problem wird weiter unten anhand der in der Figur 2 dargestellten Schaltungsanordnung noch näher erläutert werden.

Aus der deutschen Offenlegungsschrift DE 38 11 799 A1 ist eine Schaltungsanordnung bekannt, bei der ein steuerbarer Halbleiterschalter in die Verbindungsleitung zwischen den Ruhekontakten von zwei Relais und dem Massepotential einer Spannungsquelle geschaltet ist. Der Halbleiterschalter wird vor einer Drehrichtungsumkehr des durch die Relais gesteuerten Motors jeweils abgeschaltet, um so ein lastfreies Umschalten zu ermöglichen und eine Funkenbildung an den Relaiskontakten zu vermeiden.

Durch Abschalten des Halbleiterschalters bei einem nicht laufenden Motor können die Ruhekontakte der Relais potentialfrei geschaltet werden, so dass ein Kurzschluß zwischen dem Betriebspotential und einem der Motoranschlüsse, nicht zum einem unerwünschten Anlaufen des Motors führt. Kritisch bleibt aber, dass ein Fehler, der zu einem Durchlegieren des Halbleiterschalters führt, diese Schutzwirkung augenblicklich aufhebt.

Ein solcher Fehler ist insbesondere dadurch möglich, dass bei einem durchgeschalteten Halbleiterschalter, einer der Ruhekontakte des Relais, etwa über einen der Motoranschlüsse einen Kurzschluß zum Betriebspotential aufweist. In diesem Fall ist es wahrscheinlich, dass der Halbleiterschalterschalter durch einen zu hohen Strom überlastet und dadurch dauerhaft leitend wird. Besonders kritisch hierbei ist, dass durch die nun gegebene direkte Verbindung zwischen dem Massepotential und den Ruhekontakten genau der Fehlerzustand entstanden ist, der wie nachfolgend anhand der Figur 2 beschrieben, zu einem unerwünschten und damit sicherheitskritischen Anlaufen des Motors führen kann.

Es stellte sich daher die Aufgabe eine gattungsgemäße Schaltungsanordnung dahingehend zu verbessern, daß ein Auftreten des beschriebenen Fehlers ausgeschlossen ist.

Diese Aufgabe wird erfindungsgemäß dadurch gelöst, daß die Ruhekontakte über den steuerbaren Schalter und über eine Sicherung mit dem Betriebspotential verbindbar sind.

Selbst ein Durchlegieren des Halbleiterschalters aufgrund eines Fehlerzustandes, z. B. durch eine Masseverbindung eines Motoranschlusses bewirkt bei der erfindungsgemäßen Schaltungsanordnung keinen sicherheitskritischen Zustand, da in diesem Fall die in die Potentialleitung geschaltete Sicherung auslöst und den Stromfluß unterbricht.

Besonders vorteilhaft hierbei ist, dass die Zuleitung zum Betriebspotential, im Gegensatz zu der Verbindung zum Massepotential, üblicherweise ohnehin durch einer Sicherung geschützt ist, so dass in den meisten Fällen kein zusätzlicher Kostenaufwand entsteht.

Im folgenden soll die Erfindung anhand der Zeichnung dargestellt und näher erläutert werden.

Es zeigen
- Figur 1: eine erfindungsgemäße Ansteuerschaltung für einen Elektromotor,
- Figur 2: eine Ansteuerschaltung für einen Elektromotor nach einem Stand der Technik.

Die in der Figur 2 skizzierte Ansteuerschaltung nach dem Stand der Technik besteht im wesentlichen aus einem Steuergerät (8), welches mit einer Fahrzeugbatterie (10) und einem anzusteuernden Elektromotor (1) elektrisch verbunden ist. Das Steuergerät (8) weist eine Steuereinheit (7) auf, die als ein integrierter Schaltkreis und speziell als ein Microcontrollerbaustein ausgeführt sein kann. Selbstverständlich kann die Steuereinheit alternativ auch als eine aus diskreten Bauelementen bestehende Schaltung aufgebaut sein.

Die Steuereinheit (7) steuert zwei Relais (2a, 2b) an, die jeweils zumindest einen Umschaltkontakt (3a, 3b), bestehend jeweils aus einem beweglichen Schaltkontakt und zwei feststehenden Kontakten (5a, 5b, 6a, 6b), aufweisen. Die feststehenden Kontakte werden im folgenden als Ruhekontakte (5a, 5b) bzw. als Arbeitskontakte (6a, 6b) bezeichnet. Über den Umschaltkontakt (3a, 3b) jeweils eines Relais (2a, 2b) ist jeweils ein Motoranschluß (4a, 4b) entweder mit dem Pluspotential oder dem Minuspotential der Fahrzeugbatterie (10) verbindbar, wobei das Pluspotential hier, wie allgemein üblich, das Betriebspotential (+) des Fahrzeug bildet und das Minuspotential der

Fahrzeugbatterie mit der Fahrzeugkarosserie verbunden und somit gleich dem Massepotential (-) des Fahrzeugs ist.

Jeder Motoranschluß (4a, 4b) liegt somit über die Relaiskontakte entweder am Betriebspotential (+) oder am Massepotential (-) des Kraftfahrzeuges an. In der Figur 2 sind die Relaiskontakte in der Ruhestellung, also bei nicht angesteuertem Relais (2a, 2b), dargestellt. Da die Ruhekontakte (5a, 5b) beider Relais (2a, 2b) an das Massepotential (-) angeschlossen sind, sind hier beide Motoranschlüsse (4a, 4b) miteinander und zudem mit dem Massepotential (-) verbunden.

Wird eines der Relais (2a, 2b) von der Steuereinheit (7) angesteuert, so verbindet das jeweilige Relais (2a, 2b) über seinen Arbeitskontakt (6a, 6b) den zugehörigen Motoranschluß (4a, 4b) mit dem Betriebspotential (+). Da der jeweils andere Motoranschluß (4b, 4a) am Massepotential (-) verbleibt, liegt somit eine zum Betrieb des Motors erforderliche Spannung an den Motoranschlüssen (4a, 4b) an.

Auf entsprechende Weise kann der Motor (1) durch das jeweils andere Relais (2b, 2a) in die entgegengesetzte Drehrichtung gesteuert werden. Sind beide Relais (2a, 2b) angezogen, so wird der Motor (1) nicht bestromt, da beide Motoranschlüsse (4a, 4b) nun mit dem Betriebspotential (+), verbunden sind. Ein noch drehender Motor (1) wird in dieser Stellung der Relaiskontakte abgebremst, da der Selbstinduktionsstrom des Motors über die Arbeitskontakte (6a, 6b) kurzgeschlossen ist. Entsprechendes gilt, wenn die Steuereinheit (7) beide Relais (2a, 2b) gleichzeitig in ihre Ruhestellung steuert.

Als Schutzmaßnahme gegen Fehlerzustände ist eine Sicherung (9) zwischen dem Pluspol der Fahrzeugbatterie (10) und dem Steuergerät (8) vorgesehen. Die Ansprechschwelle dieser Sicherung (9) liegt dabei oberhalb der im normalen Betrieb durch den Motor (1) fließenden Stromstärke, so daß die Sicherung (9) auf einen überhöhten Motorstrom, wie er etwa bei einem Blockieren des Motors (1) auftritt oder auf einen Kurzschluß der Pluszuleitung gegen die Fahrzeugmasse ansprechen kann.

Weiterhin sind Überwachungsleitungen (12a, 12b) mit den Motoranschlüssen (4a, 4b) verbunden, über die die Steuereinheit (7) das an den Motoranschlüssen (4a, 4b) anliegende Potential überwachen kann und insbesondere überprüfen kann, ob diese Potentiale dem aktuellen Ansteuerzustand der beiden Relais (2a, 2b) entsprechen.

Die Wirksamkeit dieser Schutzmaßnahme ist selbstverständlich davon abhängig, daß die Steuereinheit (7) diese Leitungen (12a, 12b) aktiv überwacht, was eine ständige Stromversorgung der Steuereinheit (7) voraussetzt.

Die beiden Motoranschlüsse (4a, 4b) in der Ruhestellung der Relais (2a, 2b), wie dargestellt, mit der Fahrzeugmasse zu verbinden, beruht auf der Überlegung, daß bei anliegendem Massepotential (-) an den Motoranschlüssen (4a, 4b) ein interner Motorschluß, also eine Verbindung zwischen einem Motoranschluß (4a, 4b) und dem Motorgehäuse, welches ja im allgemeinem auch mit der Fahrzeugkarosserie und damit der Fahrzeugmasse (-) verbunden ist, kein Kurzschluß zwischen unterschiedlichen Potentialen entstehen kann.

Hierdurch werden aber weitaus schwerwiegendere Fehlerzustände möglich, deren Verhinderung zum Ziel der vorliegende Erfindung wurden. Es sei angenommen, daß sich die Relaiskontakte in der dargestellten Ruhestellung befinden und einer der Motoranschlüsse (4a, 4b) oder eine der Überwachungsleitungen (12a, 12b) an einem Motoranschluß (4a, 4b) eine elektrische Verbindung zum Betriebspotential (+) des Fahrzeugs erhält. Dies ist in der Figur symbolisch durch einen mit einem Pluszeichen versehenen Pfeil dargestellt, der auf eine Motoranschlußleitung (4a) deutet.

Beachtlich ist, daß ein solcher Kurzschluß unter Umgehung der Sicherung (9) entstehen kann. Wie aus der Figur 2 ersichtlich entsteht in dem angenommenen Kurzschlußfall über den beweglichen Schaltkontakt des ersten Relais (2a) eine direkte Verbindung zum Massepotential (-) an dessen Ruhekontakt (5a). Da dieser Kurzschluß einen hohen Kurzschlußstrom bewirken kann, ist eine Zerstörung von Leitungsabschnitten, etwa durch Schmelzen einer Leiterbahn oder durch Abbrennen des Ruhekontaktes (5a), nach kurzer Zeit wahrscheinlich.

Wird dadurch nun die Verbindung von dem Kurzschlußpunkt zum Massepotential (-) unterbrochen, so steht der erste Motoranschluß (4a) über den Leitungsschluß mit dem Betriebspotential (+) in Verbindung, während der zweite Motoranschluß (4b) weiterhin Massepotential über den Ruhekontakt (5b) des zweiten Relais (2b) erhält. Damit liegt am Motor (1) eine Spannung an, die ein Anlaufen des Motors (1) bewirkt. Je nach Funktion des Motors (1) kann dies eine Gefährdung von Fahrzeuginsassen bedeuten.

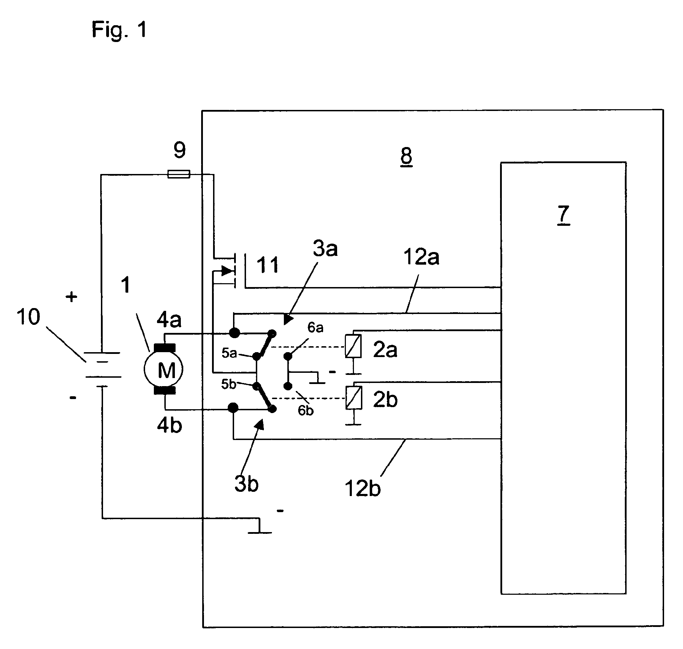

Diese Gefahr wird durch eine verbesserte Schaltungsanordnung, welche die Figur 1 zeigt, vermieden.
Die dargestellte Schaltungsanordnung stimmt in vielen Details mit der Schaltungsanordnung gemäß der Figur 2 überein, so daß für gleichartige Teile auch die gleichen Bezugszeichen verwendet werden.

Die Figur 1 zeigt die Relaiskontakte ebenfalls in ihrer Ruhestellung. Die Ruhekontakte (5a, 5b) der Relais (2a, 2b) sind diesmal aber nicht mit der Fahrzeugmasse, sondern über einen durch die Steuereinrichtung (7) steuerbaren Schalter (11), hier beispielhaft als MOS-FET-Transistor realisiert, mit dem Betriebspotential verbunden.

Die Funktionsweise der Schaltungsanordnung im normalen, fehlerfreien Betrieb unterscheidet sich ebenfalls nicht von der bekannten, in der Figur 2 dargestellten Schaltungsanordnung, lediglich abgesehen davon, daß über die Ruhekontakte (5a, 5b) der Relais (2a, 2b) das Betriebspotential (+) an den Motoranschlüssen (4a, 4b) anliegt.

Weiterhin ist vorgesehen, daß zur Energieeinsparung, etwa bei einem abgestellten Fahrzeug, das gesamte Steuergerät (8) einen Ruhezustand einnehmen kann. In diesem Ruhezustand sind die Relais (2a, 2b), sowie auch der steuerbare Schalter (11) nicht angesteuert, wodurch die Ruhekontakte (5a, 5b) der Relais (2a, 2b) potentialfrei sind. Auch wird das Potential an den Motoranschlüssen (4a, 4b) nicht durch die Steuereinheit (7) überwacht, wodurch der Ruhestrombedarf und damit die Belastung der Fahrzeugbatterie (10) im Ruhezustand des Steuergeräts (8), also bei unbenutztem Fahrzeug minimiert werden kann.

Die Fehlerbehandlung im aktiven Betrieb des Steuergeräts (8) unterscheidet sich wiederum nicht grundlegend von derjenigen der bekannten Schaltungsanordnung nach Figur 2. Stellt die Steuereinheit (7) über die Überwachungsleitungen (12a, 12b) ein fehlerhaftes Potential an einem der Motoranschlüsse (4a, 4b) fest, so steuert sie beide Relais (2a, 2b) in eine Schaltstellung, in der an beiden Motoranschlüssen (4a, 4b) das gleiche Potential anliegt, welches auch den Kurzschluß verursachte, so daß der Kurzschluß beseitigt ist und der Motorbetrieb aufgrund einer fehlenden Potentialdifferenz an den Motoranschlüssen (4a, 4b) verhindert ist. Vorzugsweise steuert die Steuereinheit (7) beide Relais (2a, 2b) in die Ruhekontaktstellung und trennt das Betriebspotential (+) durch Abschaltung des steuerbaren Schalters (11) von den Ruhekontakten (5a, 5b).

Vorteilhafter als die bekannte Schaltungsanordnung verhält sich die erfindungsgemäße Schaltungsanordnung bei kurzschlußbedingten Fehlern, die im Ruhezustand des Steuergeräts (8) auftreten. In diesem Ruhezustand liegen die mit den Motoranschlüssen (4a, 4b) verbundenen beweglichen Schaltkontakte an den untereinander verbundenen Ruhekontakten (5a, 5b) der Relais (2a, 2b) an und der steuerbare Schalter (11) ist nicht durch die Steuereinheit (7) angesteuert und daher geöffnet.

Da der Verbindungspunkt der Ruhekontakte (5a, 5b) somit potentialfrei ist, ist es unerheblich ob einer der Motoranschlüsse (4a, 4b) oder eine der mit den Motoranschlüssen (4a, 4b) verbundenen Überwachungsleitungen (12a, 12b) einen unzulässigen Kontakt mit dem Betriebs- oder Massepotential des Fahrzeug erhält. Es kann nämlich weder an den Motoranschlüssen (4a, 4b) eine Potentialdifferenz auftreten, die den Motor (1) in Betrieb setzt, noch kann eine zerstörerische Kurzschlußspannung an den Relaiskontakten auftreten.

Die Schaltungsanordnung erweist sich sogar dann noch als sicher, wenn durch einen seltenen zusätzlichen Fehler der steuerbare Schalter (11) den Verbindungspunkt der Ruhekontakte (5a, 5b) nicht potentialfrei schaltet. Erhält in einem solchen Fall einer der Motoranschlüsse (4a, 4b) eine irreguläre Verbindung zum Betriebspotential (+), so ergibt sich wiederum keine Potentialdifferenz, da an beiden Motoranschlüssen bereits zuvor Betriebspotential (+), von der Fahrzeugbatterie (10) zugeführt über die Sicherung (9), den geschlossenen Schalter (11) und über einen der Relaiskontakte, anlag.

Der kritischste denkbare Fehlerfall besteht darin, daß bei defektem und dabei geschlossenem Schalter (11) an einem der Motoranschlüsse (4a, 4b) ein Kurzschluß zur Fahrzeugmasse auftritt. In diesem Fall fließt ein hoher Kurzschlußstrom über den kurzschlußseitigen Relaisruhekontakt, den geschlossenen Schalter (11) und die Sicherung (9) zum Pluspol der Fahrzeugbatterie (10). Dieser Fehler wird durch das Auslösen der Sicherung (9) abgefangen.

Die erfindungsgemäße Schaltungsanordnung ist damit, trotz relativ geringer schaltungstechnischer Änderungen weitaus sicherer als vorbekannte Schaltungsanordnungen. Überdies ist sie energiesparender, da ein für das Steuergerät sicherer Ruhezustand realisierbar ist, in dem die Steuereinheit keinerlei Überwachungsfunktionen ausführen muß, wodurch deren Ruhestromaufnahme minimiert werden kann.

### Bezugszeichen

- 1: (Elektro)motor
- 2a, 2b: Relais
- 3a, 3b: Umschaltkontakte
- 4a, 4b: Motoranschlüsse
- 5a, 5b: Ruhekontakte
- 6a, 6b: Arbeitskontakte
- 7: Steuereinheit
- 8: Steuergerät
- 9: Sicherung
- 10: Fahrzeugbatterie
- 11: (steuerbarer) Schalter
- 12a, 12b: Überwachungsleitungen

- +: Betriebspotential
- -: Massepotential

## Patentansprüche

1. Schaltungsanordnung zur Ansteuerung eines Elektromotors in einem Kraftfahrzeug, mit zwei Relais, welche jeweils einen Umschaltkontakt aufweise, wobei die Umschaltkontakte eine Brückenschaltung zum Verbinden der Motoranschlüsse mit einem Massepotential und einem Betriebspotential ausbilden, wobei bei nicht angesteuerten Relais die Motoranschlüsse über die Ruhekontakte miteinander verbunden sind, und wobei die Ruhekontakte über einen steuerbaren Schalter mit einem Potential verbindbar sind.
**dadurch gekennzeichnet,**
**daß** die Ruhekontakte (5a, 5b) über den steuerbaren Schalter (11) und über eine Sicherung (9) mit dem Betriebspotential (+) verbindbar sind.

2. Schaltungsanordnung nach Anspruch 1, **dadurch gekennzeichnet, daß** der steuerbare Schalter (11) ein Halbleiterschalter und vorzugsweise ein MOS-FET-Transistor ist.

3. Schaltungsanordnung nach Anspruch 1 oder 2, **dadurch gekennzeichnet, daß** die Relais (2a, 2b) und der steuerbare Schalter (11) durch die gleiche Steuereinheit (7) angesteuert werden.

4. Schaltungsanordnung nach Anspruch 1 oder 3, **dadurch gekennzeichnet, daß** die Steuereinheit (7) den durch den Elektromotor (1) fließenden Strom und/oder die an dem Elektromotor (1) anliegende Spannung überwacht.

5. Schaltungsanordnung nach Anspruch 3 oder 4, **dadurch gekennzeichnet, daß** die Steuereinheit (7) durch einen Mikrocomputer ausgebildet ist oder einen Mikrocomputer aufweist.

## Claims

1. Switching assembly intended for actuating an electric motor in a motor vehicle and having two relays, each of which has a changeover contact, the changeover contacts constituting a bridge circuit for connecting the terminal leads of the motor to a ground potential and an operating potential, for which purpose the terminal leads of the motor are interconnected by way of the break contacts when the relays are not being actuated and with the break contacts capable of being connected to a potential by way of a controllable switch,
**characterised in that**
the break contacts (5a, 5b) can be connected to the operating potential (+) by way of the controllable switch (11) and by way of a fuse (9).

2. Switching assembly in accordance with Claim 1, **characterised in that** the controllable switch (11) is a semi-conductor switch and preferably a MOS-FET transistor.

3. Switching assembly in accordance with Claim 1 or Claim 2, **characterised in that** the relays (2a, 2b) and the controllable switch (11) are controlled by the same control unit (7).

4. Switching assembly in accordance with Claim 1 or Claim 3, **characterised in that** the control unit (7) monitors the current flowing through the electric motor (1) and/or the voltage applied to the electric motor (1).

5. Switching assembly in accordance with either of Claims 3 or 4, **characterised in that** the control unit (7) is constituted by a microcontroller or has a microcomputer.

## Revendications

1. Circuit de commutation pour l'excitation d'un moteur électrique dans un véhicule automobile, avec deux relais, qui présentent, chacun, un contact à permutation, sachant que lesdits contacts à permutation forment un circuit en pont pour la connexion des bornes du moteur à un potentiel de masse et à un potentiel de fonctionnement, sachant que, lorsque les relais ne sont pas excités, les bornes du moteur sont interconnectées par l'intermédiaire des contacts de repos, et que les contacts de repos sont connectés à une tension, par l'intermédiaire d'un commutateur commandé, **caractérisé en ce que** que les contacts de repos (5a, 5b) peuvent être connectés à une tension de fonctionnement (+) par l'intermédiaire du commutateur commandé (11) et par l'intermédiaire d'un coupe-circuit (9).

2. Circuit de commutation selon la revendication 1, **caractérisé en ce que** le commutateur commandé (11) est un commutateur à semi-conducteur, de préférence un transistor MOS-FET.

3. Circuit de commutation selon revendication 1 ou 2, **caractérisé en ce que** les relais (2a, 2b) et le commutateur commandé (11) sont excités par la même unité de commande (7).

4. Circuit de commutation selon revendication 1 ou 3, **caractérisé en ce que** l'unité de commande (7) contrôle le courant qui traverse le moteur électrique (1) et / ou la tension appliquée au moteur électrique (1).

5. Circuit de commutation selon revendication 3 ou 4, **caractérisé en ce que** l'unité de commande (7) est constituée par un microordinateur ou est dotée d'un micro-ordinateur.
